(19) Europäisches Patentamt
European Patent Office
Office européen des brevets

(11) Veröffentlichungsnummer : **0 464 459 B1**

(12) # EUROPÄISCHE PATENTSCHRIFT

(45) Veröffentlichungstag der Patentschrift :
**10.11.93 Patentblatt 93/45**

(51) Int. Cl.$^5$ : **B01J 31/16**

(21) Anmeldenummer : **91110000.6**

(22) Anmeldetag : **19.06.91**

(54) **Palladium-haltige Katalysatorzubereitung.**

(30) Priorität : **29.06.90 DE 4020689**

(43) Veröffentlichungstag der Anmeldung :
**08.01.92 Patentblatt 92/02**

(45) Bekanntmachung des Hinweises auf die Patenterteilung :
**10.11.93 Patentblatt 93/45**

(84) Benannte Vertragsstaaten :
**DE ES FR GB IT SE**

(56) Entgegenhaltungen :
**EP-A- 0 180 801**
**EP-A- 0 298 327**
**GB-A- 2 092 017**

(73) Patentinhaber : **BAYER AG**
**D-51368 Leverkusen (DE)**

(72) Erfinder : **Huggins, John, Dr.**
**Christian-Hess-Strasse 73**
**W-5090 Leverkusen (DE)**

EP 0 464 459 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft eine homogene, flüssige, in unpolaren Medien lösliche, Palladium-haltige Katalysatorzubereitung.

Übergangsmetallkatalysatoren auf der Basis von Palladium sind für die Hydrierung von aliphatisch ungesättigten Kohlenstoff-Kohlenstoff-Bindungen sowie die Reduzierung verschiedener funktioneller organischer Gruppen, z.B. Aldehyd-, Keto- und Nitrogruppen, mit Wasserstoff bekannt. Üblicherweise wird das Palladium in heterogener Form auf einem Trägermaterial eingesetzt. Beispiele sind Palladium auf Aktivkohle, Bariumsulfat oder Calciumcarbonat, wie in Rylander ("Catalytic Hydrogenation in Organic Synthesis", Academic Press: New York, 1979, Seite 1-22, 33-34) beschrieben ist.

Lösliche Palladium-haltige Hydrierungskatalystoren sind weniger bekannt. Stern und Maples (Journal of Catalysis, Vol. 27, (1972) 120-133) beschreiben die Hydrierung von ungesättigten organischen Verbindungen mit Pd(O)-Komplexen des Typs $(L)_3Pd_2$ oder $(L)PdCl_2$ ($L = Ph_2P-(CH_2)_n-PPh_2$). Sisak, Jablonkai und Ungvary (Acta Chimica Academiae Scientiarum Hungaricae, Vol. 103 (1980) 33-42) beschreiben die Hydrierung von Dienen sowie Alkynen mit $(DMF)_2PdCl_2$ (DMF = Dimethylformamid). Andere Katalysatoren des Typs $(L)_2PdCl_2$, ($L = PPh_3$ oder Dimethylsulfoxid) werden ebenfalls erwähnt. Diese Katalysatoren werden vorzugsweise in polaren organischen Lösungsmitteln wie DMF angewandt.

Diese Katalysatoren haben jedoch Nachteile. Die Palladium(O)-Verbindungen sind gegenüber Luftsauerstoff empfindlich. Bei den Palladium(II)-Verbindungen ist die Löslichkeit für den Einsatz in unpolaren Medien zu gering.

Wichtige unpolare Medien sind unpolare Flüssigkeiten wie Hexan, Toluol oder Diethylether sowie cyclische, lineare und/oder verzweigte Siloxane. Gleichfalls ist die Löslichkeit in unpolaren flüssigen Substanzen bei der Hydrierung ohne Lösungsmittel gewünscht. Beispielsweise ist bei der Hydrierung von Vinyl-haltigen Siloxanen oder der Herstellung von Wasserstoff-absorbierenden Polysiloxan-Zubereitungen, wie sie in GB 2 167 424 A beschrieben ist, eine ausreichende Löslichkeit ebenfalls erforderlich.

Demgemäß liegt der Erfindung die Aufgabe zugrunde, stark wirksame und lösliche Katalysatoren für die Hydrierung in unpolaren Medien zu schaffen.

In der vorliegenden Erfindung wurde überraschenderweise festgestellt, daß bestimmte Palladium-Verbindungen, die selbst in unpolaren Medien nur geringfügig löslich sind, durch Reaktion mit funktionellen Siloxanen in eine lösliche Form umgewandelt werden. Diese Erfindung bevorzugt eine Katalysatorzubereitung, die aus einer Palladium(II)-Verbindung und einem funktionellen Siloxan hergestellt wird, worin das funktionelle Siloxan im Durchschnitt mindestens eine reaktionsfähige Gruppe pro Molekül enthält, eine Viskosität von 2 bis 2.000.000 mPa-s bei 25 °C aufweist und aus cyclischen, linearen oder verzweigten Strukturen und deren Kombinationen aufgebaut ist.

Die erfindungsgemäße Palladiumverbindung hat die Formel (1)

$$PdX_2 \qquad (1),$$

wobei

X = -Cl, -Br, oder $O_2CR_1$ und

$R_1$ = Alkyl-, Cycloalkyl-, Aryl- oder fluorierte Alkyl-Gruppen mit 1 bis 20 C-Atomen sind.

In bevorzugter Ausführung ist die Verbindung ein Komplex einer organischen Carbonsäure. Beispiele sind Palladium(II)acetat oder Palladium(II)trifluoracetat.

Das funktionelle Siloxan kann ein cyclisches, lineares oder verzweigtes Siloxan sein, das einen Anteil an reaktionsfähigen Gruppen enthält. Besonders bevorzugt sind lineare Dimethylsiloxane mit Viskositäten von 3 bis 20.000 mPa.s oder cyclische Siloxane mit durchschnittlich 4 bis 10 Siloxy-Einheiten pro Molekül. In der bevorzugten Ausführung besitzen die reaktionsfähigen Gruppen die Struktur (2)-(4),

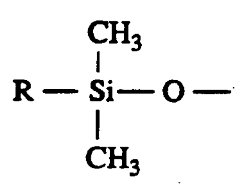

(2)

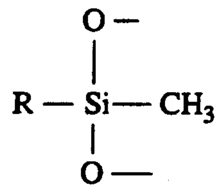

(3)

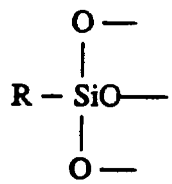

(4)

worin
der funktionelle Substituent R eine primäre, sekundäre oder tertiäre Amino-, Pyridyl-, Vinyl- oder Allyl-Struktur enthält. Besonders bevorzugt sind funktionelle Substituenten der Struktur (5),

$R^3{}_2N(CH_2)_n$-  (5)

$R^3{}_2N(CH_2)_n$-  (5)

wobei
$R^3$ ein Wasserstoff-, Alkyl-, Cycloalkyl-, oder Arylrest mit nicht mehr als 15 Kohlenstoffatomen ist und n = 1 bis 4 ist. Auch bevorzugt sind funktionelle Substituenten mit einen ungesättigten organischen Rest der Struktur (6),

$CH_2=CH(CH_2)_m$-  (6)

wobei
m = 0 bis 13 ist.

Beispiele sind 3-Aminopropyl, 4-Aminobutyl, N-(2-Aminoethyl)-3-aminopropyl, 3-(Cyclohexylamino)propyl, (Cyclohexylamino)methyl, Vinyl oder Allyl.

Die Herstellung der erfindungsgemäßen Katalysatorzubereitungen wird vorzugsweise in Gegenwart eines inerten, unter Normalbedingungen flüssigen, organischen Mediums, in welchem die Palladiumverbindung und bzw. oder das funktionelle Siloxan löslich oder dispergierbar ist, durchgeführt. Solche Medien sind z.B. aromatische Kohlenwasserstoffe und halogenierte aromatische Kohlenwasserstoffe, verschiedene sauerstoffhaltige organische Verbindungen, wie Ethylenglykoldialkylether, Essigsäure oder Tetrahydrofuran, sowie halogenierte, gesättigte Kohlenwasserstoffe, z.B. Methylenchlorid oder Chloroform.

Gegebenenfalls können die Katalysatorzubereitungen auch ohne Lösungsmittel hergestellt werden.

In bevorzugter Ausführung wird die Palladiumverbindung mit dem funktionellen Siloxan in Gegenwart eines organischen Lösungsmittels bei etwa 20°C bis unterhalb der Zersetzungstemperatur der Reaktionsteilnehmer zur Reaktion gebracht. Besonders bevorzugt ist die Herstellung bei Raumtemperatur. Die Herstellung der Katalysatorzubereitungen kann in wenigen Minuten bis mehreren Stunden erfolgen.

Werden andere Palladium-Verbindungen, z.B. Palladium(II)acetonylacetonat, oder Siloxane, die keine reaktionsfähigen Gruppen enthalten, verwendet, findet keine Reaktion statt und nach Entfernung des Lösungsmittels fällt die Palladium-Verbindung als feste Substanz aus.

Bei Verwendung der erfindungsgemäßen Katalysatorzubereitungen werden Hydrierungsreaktionen unter denselben Bedingungen durchgeführt wie sie bei Gebrauch vorbekannter Katalysatoren angewandt werden. Im Unterschied dazu liegt in diesen Katalysatorzubereitungen Palladium in löslicher Form vor. Die Hydrierungen können mit oder ohne Lösungsmittel durchgeführt werden. Wegen der hervorragenden Löslichkeit dieser Zubereitungen können auch unpolare, organische Lösungsmittel und Reaktanden gut mit dem Katalysator verwendet werden.

Bei der Anwendung dieser Katalysatorzubereitungen können aliphatische ungesättigte Kohlenstoff-Kohlenstoff-Bindungen hydriert oder verschiedene funktionelle organische Gruppen, z.B. Aldehyd-, Keto- und Nitrogruppen, reduziert werden.

Ferner kann die Hydrierung in verschiedenen Fällen selektiv sein, d.h. aliphatische Mehrfachbindungen können hydriert werden, während die funktionellen Gruppen intakt bleiben oder umgekehrt.

Die erfindungsgemäßen Katalysatorzubereitungen werden anhand nachstehender Beispiele näher erläutert.

Beispiel 1

In einem 100 ml Dreihalskolben mit Kühler, Thermometer und Magnetrührer werden 1,5 g Palladium(II)acetat und 30 ml Toluol vorgelegt. Man erwärmt die Mischung auf 40°C für 1 Stunde bis das Palladium(II)acetat vollständig gelöst ist. Dazu werden 20 g eines Polydimethylsiloxans mit 0,82 mMol/g (Cyclohexylamino)methyldimethylsiloxy-Gruppen und einer Viskosität von 55 mPa.s (25°C) zugegeben Nach 2 Stunden wird das Toluol bei 30°C und 5 mbar abgezogen. Die Katalysatorzubereitung wird als hellbraune, klare Flüssigkeit mit 3,37 Gew.-% Palladium in einer Menge von 21 g erhalten.

Beispiel 2

In einem in Beispiel 1 beschriebenen Dreihalskolben werden 531 mg Palladium(II)acetat und 20 ml Toluol vorgelegt. Das Palladium(II)acetat wird bei 40°C gelöst, dann gibt man 20 g eines Polydimethylsiloxans mit (Cyclohexylamin)methyldimethylsiloxy- und (Cyclohexylamin)methyl(methyl)siloxy-Gruppen, insgesamt 0,71 mMol NH/g und einer Viskosität von 200 mPa.s (25°C) in 30 ml Toluol dazu. Nach drei Stunden bei 40°C zieht man bei 40°C und 5 mbar das Toluol ab. Der Katalysator wird als gelbe, klare Flüssigkeit mit 1,31 Gew.-% Palladium in einer Menge von 19 g erhalten.

Beispiel 3

In einem in Beispiel 1 beschriebenen Dreihalskolben wird zuerst eine Mischung aus 730 mg Palladium(II)chlorid und 30 ml Methylenchlorid 8h bei 40°C gerührt. Dann gibt man 20 g eines Polydimethylsiloxans mit (Cyclohexylamin)methyldimethylsiloxy- und (Cyclohexylamin)methyl(methyl)siloxy-Gruppen, insgesamt 0,71 mMol NH/g und einer Viskosität von 200 mPa.s (25°C) dazu. Die Mischung wird weitere 16 Stunden bei 40°C gerührt und anschließend filtriert. Das Methylenchlorid wird bei 30°C und 30 mbar abgezogen. Der Katalysator wird als dunkelbraune, klare Flüssigkeit mit 2,06 Gew.-% Palladium in einer Menge von 20 g erhalten.

Beispiel 4

In einem 100 ml Kolben mit Magnetrührer werden bei 25°C 211 mg Palladium(II)acetat in 50 g Methylenchlorid gelöst. Man gibt 20 g Tetramethyltetravinylcyclotetrasiloxan dazu und rührt 24h. Dabei verfärbt sich die zunächst rote Lösung leicht gelblich. Das Methylenchlorid wird bei 25°C und 30 mbar abgezogen. Der Katalysator wird als leicht gelbe, klare Flüssigkeit mit 0,52 Gew.-% Pd in einer Menge von 19 g erhalten.

Beispiel 5

In einem 100 ml Einhalskolben mit Magnetrührer werden 224 mg Palladium(II)acetat, 2 g Essigsäure und 20 g Tetramethyltetravinylcyclotetrasiloxan vorgelegt. Nach 4 tagen bei 25°C entsteht eine homogene, gelbgrüne Lösung.#

Die flüchtigen Anteile werden bei 40°C und 5 mbar abdestilliert. Der Katalystor wird als leicht gelbe, klare Flüssigkeit mit 0,51 Gew.-% Pd in einer Menge von 20 g erhalten.

Beispiel 6

Im folgenden Beispiel soll gezeigt werden, daß andere, nicht beanspruchte Palladium(II)komplexe bei diesen Reaktionen keine lösliche Katalysatorzubereitungen bilden.

In einem 50 ml Dreihalskolben mit Kühler, Thermometer und Magnetrührer werden 304 mg Palladium(II) acetylacetonat und 20 ml Toluol vorgelegt. Das Palladium(II)acetylacetonat wird bei 80°C gelöst, dann gibt man 10 g eines Polydimethylsiloxans mit (Cyclohexylamin)methyldimethylsiloxy- und (Cyclohexylamin)methyl)siloxy-Gruppen, insgesamt 0,71 mMol NH/g und einer Viskosität von 200 mPa-s (25°C), dazu. Nach drei Stunden bei 80°C zieht man bei 80°C und 5 mbar das Toluol ab. Das Palladiumkomplex fällt al feste Substanz wieder aus.

Beispiel 7

Im folgenden Beispiel soll gezeigt weden, daß nicht funktionelle Polydimethylsiloxane bei diesen Reaktionen keine löslichen Katalysatorzubereitungen bilden.

In einem 50 ml Dreihalskolben mit Kühler, Thermometer und Magnetrührer werden 225 mg Palladium(II)acetat und 20 ml Toluol vorgelegt. Das Palladium(II)acetat wird bei 40°C gelöst und man gibt 50 g eines Trimethylsiloxy-endgestoppten Polydimethylsiloxans mit einer Viskosität von 50 mPa-s (25°C) dazu. Nach drei Stunden bei 40°C wird das Toluol abgezogen. Das Palladiumkomplex fällt als feste Substanz wieder aus.

Beispiel 8

In einem 25 ml Einhalskolben mit Magnetrührer werden 1,5 g eines Vinyldimethylsiloxy-endgestoppten Polydimethylsiloxand mit einer Viskosität von 11 mPa-s (25°C) und insgesamt 1,8 mmol/g $SiCH{=}CH_3$ sowie 17,5 mg der Katalysatorzubereitung aus Beispiel 2 vorgelegt. Der Kolben wird an einer Hydrierapparatur angeschlossen, dreimal evakuiert und mit Wasserstoff gespült und die Gasaufnahme bei Raumtemperatur beobachtet. Anfangs wird 4,4 ml/h $H_2$ absorbiert. Nach Beendigung der Wasserstoffaufnahme wird belüftet und das Siloxan mittels $^1H$ NMR untersucht. Eine quantitative Hydrierung der Vinylsiloxygruppen zu Ethylsiloxygruppen wird festgestellt.

Beispiele 9-19

In einer Hydrierapparatur werden gemäß Beispiel 8 Substanzen mit ungesättigten Kohlenstoff-Kohlenstoff-Bindungen hydriert und die Wasserstoffaufnahme bei Raumtemperatur beobachet. Die Ergebnisse sind in Tabelle 1 aufgeführt.

**Tabelle 1**

| Beispiel | Substanz Typ | g | Katalysator Beispiel | mmol Pd | ml/h |
|---|---|---|---|---|---|
| 9 | 1-Octen | 50 | 1 | 0,1 | 3,9 |
| 10 | " | 50 | 2 | 0,1 | 22 |
| 11 | " | 50 | 3 | 0,1 | 3,2 |
| 12 | " | 50 | 4 | 0,1 | 48 |
| 13 | Vinyl-siloxan* | 50 | 1 | 0,1 | 2,3 |
| 14 | " | 50 | 2 | 0,1 | 1,1 |
| 15 | " | 50 | 3 | 0,1 | 1,0 |
| 16 | " | 50 | 4 | 0,1 | 1,9 |
| 17 | " | 50 | 5 | 0,1 | 0,83 |
| 18 | $D(Me,Vi)_4$[b] | 50 | 1 | 0,1 | 1,0 |
| 19 | " | 50 | 4 | 0,1 | 1,5 |

* Vinyldimethyl-endgestopptes Polydimethylsiloxan mit 1,8 mmol/g $(SiCH)CH_2$,

b Tetramethyltetravinylcyclotetrasiloxan

## Patentansprüche

1. Eine Palladium-haltige Katalysatorzubereitung, erhältlich durch Umsetzung einer Palladium(II)Verbindung der Formel I

$$PdX_2 \qquad I$$

worin

X = -Cl, -Br, oder $-O_2CR_1$ und

$R_1$ = Alkyl-, Cycloalkyl-, Aryl- oder fluorierte Alkyl-Gruppen mit 1 bis 20 Kohlenstoffatomen bedeuten,

mit einem funktionellen Siloxan, wobei das funktionelle Siloxan im Durchschnitt mindestens eine reaktionsfähige Gruppe pro Molekül enthält, eine Viskosität von 2 bis 2.000.000 mPa-s bei 25 °C aufweist und aus cyclischen, linearen oder verzweigten Strukturen und deren Kombinationen aufgebaut ist.

2. Katalysatorzubereitung gemäß Anspruch 1, dadurch gekennzeichnet, daß die Palladium(II)Verbindung Palladium(II)acetat oder Palladium(II)trifluoracetat ist.

3. Katalysatorzubereitung gemäß Anspruch 1, dadurch gekennzeichnet, daß die Palladium(II)Verbindung Palladium(II)chlorid ist.

4. Katalysatorzubereitung gemäß einem der Ansprüche 1-3, dadurch gekennzeichnet, daß das funktionelle Siloxan im Durchschnitt mindestens eine primäre, sekundare oder tertiäre Aminogruppe pro Molekül enthält.

5. Katalysatorzubreitung gemäß einem der Ansprüche 1-4, dadurch gekennzeichnet, daß das funktionelle Siloxan mindestens eine funktionelle Gruppe der Formel II, III oder IV pro Molekül enthält,

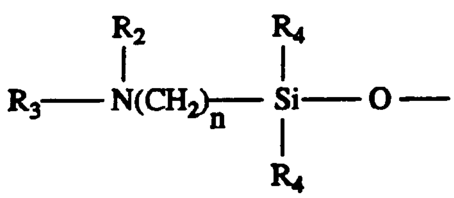

II

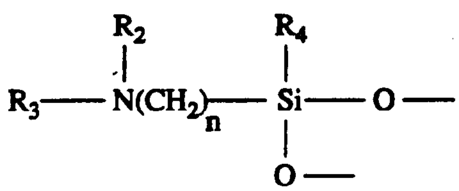

III

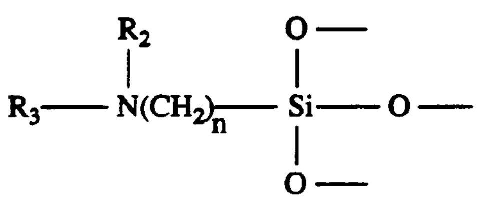

IV

worin

$R_2$ bzw. $R_3$ einen Wasserstoff-, Alkyl-, Cycloalkyl-, oder Arylrest mit nicht mehr als 15 Kohlenstoffatomen und

$R_4$ Methyl oder Phenyl darstellen und n = 1 bis 4 ist.

6. Katalysatorzubereitung gemäß einem der Ansprüche 1-3, dadurch gekennzeichnet, daß das funktionelle Siloxan eine oder mehrere Silizium-gebundene Vinyl-, Allyl- oder andere ungesättigte organische Gruppen mit 3 bis 20 Kohlenstoffatomen enthält.

7. Katalysatorzubereitung gemäß einem der Ansprüche 1-3, dadurch gekennzeichnet, daß das funktionelle Siloxan Tetramethyltetravinylcyclotetrasiloxan ist.

## Claims

1. A palladium-containing catalyst preparation obtainable by reaction of a palladium(II) compound corresponding to formula I

$$PdX_2 \qquad (1)$$

in which

X = -Cl, -Br or $-O_2CR_1$ and

$R_1$ = alkyl, cycloalkyl, aryl or fluorinated alkyl groups containing 1 to 20 carbon atoms,

with a functional siloxane, the functional siloxane containing on average at least one reactive group per molecule, having a viscosity of 2 to 2,000,000 mPa.s at 25°C and being made up of cylic, linear or branched structures and combinations thereof.

2. A catalyst preparation as claimed in claim 1, characterized in that the palladium(II) compound is palladium(II) acetate or palladium(II) trifluoroacetate.

3. A catalyst preparation as claimed in claim 1, characterized in that the palladium(II) compound is palladium(II) chloride.

4. A catalyst preparation as claimed in any of claims 1 to 3, characterized in that the functional siloxane contains on average at least one primary, secondary or tertiary amino group per molecule.

5. A catalyst preparation as claimed in any of claims 1 to 4, characterized in that the functional siloxane contains at least one functional group corresponding to formula II, III or IV per molecule:

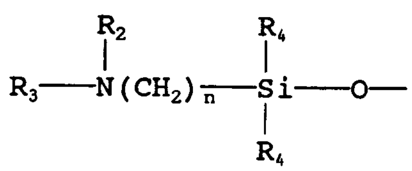

II

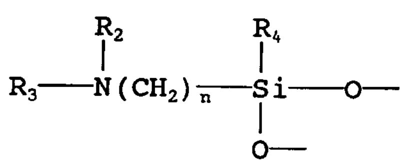

III

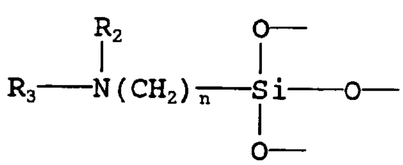

IV

in which

$R_2$ and $R_3$ represent hydrogen or an alkyl, cycloalkyl or aryl radical containing no more than 15 carbon atoms and

$R_4$ is methyl or phenyl and n = 1 to 4.

6. A catalyst preparation as claimed in any of claims 1 to 3, characterized in that the functional siloxane contains one or more silicon-bound vinyl, allyl or other unsaturated organic groups containing 3 to 20 carbon atoms.

7. A catalyst preparation as claimed in any of claims 1 to 3, characterized in that the functional siloxane is tetramethyl tetravinyl cyclotetrasiloxane.

## Revendications

1. Préparation de catalyseur contenant du palladium, obtenue par réaction d'un composé de palladium (II) de formule I

$$PdX_2 \qquad I$$

dans laquelle
X représente -Cl, -Br ou $-O_2CR_1$ et
$R_1$ représente des groupes alkyle, cycloalkyle, aryle ou fluoralkyle ayant 1 à 20 atomes de carbone,
avec un siloxane fonctionnel, le siloxane fonctionnel contenant en moyenne au moins un groupe réactif par molécule, présentant une viscosité à 25°C de 2 à 2 000 000 mPa.s et étant constitué de structures cycliques, linéaires ou ramifiées et de leurs associations.

2. Préparation de catalyseur suivant la revendication 1, caractérisée en ce que le composé de palladium (II) est l'acétate de palladium (II) ou le trifluoracétate de palladium (II).

3. Préparation de catalyseur suivant la revendication 1, caractérisée en ce que le composé de palladium (II) est le chlorure de palladium (II).

4. Préparation de catalyseur suivant l'une des revendications 1 à 3, caractérisée en ce que le siloxane fonctionnel contient en moyenne au moins un groupe amino primaire, secondaire ou tertiaire par molécule.

5. Préparation de catalyseur suivant l'une des revendications 1 à 4, caractérisée en ce que le siloxane fonctionnel contient au moins un groupe fonctionnel de formule II, III ou IV par molécule :

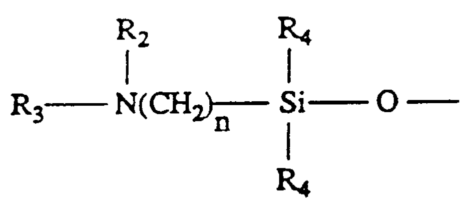

II

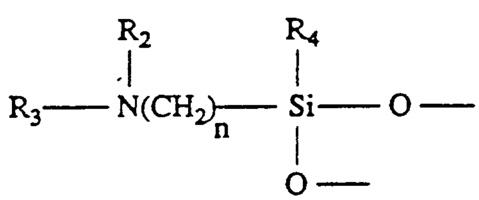

III

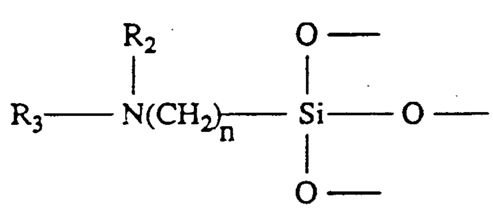

IV

où
$R_2$ et $R_3$ représentent l'hydrogène, un reste alkyle, cycloalkyle ou aryle n'ayant pas plus de 15 ato-

mes de carbone et

$R_4$ est un groupe méthyle ou phényle et

n a une valeur de 1 à 4.

**6.** Préparation de catalyseur suivant l'une des revendications 1 à 3, caractérisée en ce que le siloxane fonctionnel contient un ou plusieurs groupes vinyle, allyle et autres groupes organiques non saturés ayant 3 à 20 atomes de carbone, liés au silicium.

**7.** Préparation de catalyseur suivant l'une des revendications 1 à 3, caractérisée en ce que le siloxane fonctionnel est le tétraméthyltétravinylcyclotétrasiloxane.